# EUROPEAN PATENT APPLICATION

(11) **EP 3 832 988 A1**
(43) Date of publication of application: **09.06.2021**
(21) Application number: 20775566.1
(22) Date of filing: 12.02.2020
(51) Int. Cl.: H04L 29/08, H04L 12/715

(54) **NODE TRAFFIC DISPATCHING METHOD AND APPARATUS, ELECTRONIC DEVICE, AND STORAGE MEDIUM**

(30) Priority: 08.10.2019 CN 201910949285
(71) Applicant: Wangsu Science & Technology Co., Ltd., Shanghai 200030 (CN)
(72) Inventor: CHEN, Zhizhong, Shanghai200030 (CN)
(74) Representative: Flügel Preissner Schober Seidel
(86) International application number: PCT/CN2020/074948
(87) International publication number: WO 2021/068441

(57) **Abstract**

Embodiments of the present disclosure relates to communication technology, and in particular to a method and an apparatus for scheduling traffic of a node, an electronic device and a storage medium. The method for scheduling traffic of a node includes: obtaining a target node and each visitor of the target node, where traffic of the target node is to be scheduled out (101); obtaining a corresponding node accessed by each visitor when using a server address with a different path attribute, where each corresponding node pre-broadcasts a server address with at least two different path attributes for the visitor to access (102); obtaining a scheduled-in node from the corresponding node of each visitor (103); and scheduling the traffic of the target node to the scheduled-in node (104). In embodiments of the present disclosure, a problem of unbalanced scheduling of the traffic between different nodes in an anycast cluster is solved, and an efficiency of distributing traffic load between nodes is improved.

## Description

### CROSS REFERENCE TO RELATED APPLICATIONS

The present disclosure is based on the Chinese Patent Application No. 201910949285.6, entitled "METHOD AND APPARATUS FOR SCHEDULING TRAFFIC OF NODE , ELECTRONIC DEVICE AND STORAGE MEDIUM" filed on October 8, 2019, which is incorporated herein in its entirety by reference.

### TECHNICAL FIELD

Embodiments of the present disclosure relates to communication technology, and in particular to a method and an apparatus for scheduling traffic of a node, an electronic device and a storage medium.

### BACKGROUND

A Border Gateway Protocol (BGP) is a routing protocol of an autonomous system running on a Transmission Control Protocol (TCP), and a BGP system is mainly used to exchange network reachability information with other BGP systems. Anycast identifies a group of servers or nodes providing specific services through one anycast address on an IP network, but a client does not care which server or node specifically provides the service, and a packet accessing the anycast address may be routed to any one server or node in the group of servers or nodes by the IP network. BGP anycast refers to that different servers or nodes provide BGP anycast cluster services to external customers by using the same anycast address based on anycast technology. In a practical application, distribution of traffic between all nodes is determined by a routing addressing mechanism, and the traffic will be automatically directed to a nearest node. However, which node the traffic is specifically directed to is uncontrollable, resulting in unbalanced distribution of traffic between nodes. Therefore, the traffic between different nodes is required to be scheduled if necessary so as to avoid a case that the nodes receive overload traffic, and the like.

However, the inventors found that there are at least the following problems in existing technologies: the traffic between nodes is usually scheduled by manually adjusting routing broadcasts to external customers provided by the nodes, resulting in a large manual workload and a slow speed, and producing unpredictable traffic fluctuation and node traffic change, which severely affects a quality of network services provided by the nodes.

### SUMMARY

An objective of embodiments of the present disclosure is to provide a method and an apparatus for scheduling traffic of a node, a server and a storage medium to solve a problem of unbalanced scheduling of the traffic between different nodes in an anycast cluster and to improve an efficiency of distributing traffic loads between nodes.

To solve the above problems, embodiments of the present disclosure provides a method for scheduling traffic of a node , which includes: obtaining a target node and each visitor of the target node, where the traffic of the target node is to be scheduled out; obtaining a corresponding node accessed by each visitor when using a server address with a different path attribute, where each corresponding node pre-broadcasts a server address with at least two different path attributes for the visitor to access; obtaining a scheduled-in node from the corresponding node of each visitor; and scheduling the traffic of the target node to the scheduled-in node.

Embodiments of the present disclosure further provides an apparatus for scheduling traffic of a node , which includes: a first obtaining module, configured to obtain a target node and each visitor of the target node, where the traffic of the target node is to be scheduled out; a second obtaining module, configured to obtain a corresponding node accessed by each visitor when using a server address with a different path attribute, where each corresponding node pre-broadcasts a server address with at least two different path attributes for the visitor to access; a third obtaining module, configured to obtain a scheduled-in node from the corresponding node of each visitor; and a traffic scheduling module, configured to schedule the traffic of the target node to the scheduled-in node.

Embodiments of the present disclosure further provides an electronic device, which includes: at least one processor and a memory connected and communicated with the at least one processor, where the memory stores instructions executable by the at least one processor, and the instructions, when executed by the at least one processor, cause the at least one processor to perform the above method for scheduling traffic of a node.

Embodiments of the present disclosure further provides a computer storage medium storing computer programs, and the computer programs, when executed by a processor, cause the processor to perform the above method for scheduling traffic of a node.

Compared with existing technologies, the target node and each visitor of the target node are obtained in embodiments of the present disclosure, where the traffic of the target node is to be scheduled out, a corresponding node accessed by each visitor when using a server address with a different path attribute is obtained, where each corresponding node pre-broadcasts a server address with at least two different path attributes for the visitor to access, a scheduled-in node is obtained from the corresponding node of each visitor, and the traffic of the target node is scheduled to the scheduled-in node. That is, each node pre-broadcasts a server address with at least two different path attributes for the visitor to selectively access. Since the server address with the different path attribute covers different network ranges, the visitor may access different nodes when using the server address with the different path attribute. Therefore, by obtaining different nodes accessed by the visitor, the traffic of the target node may be accurately scheduled to another node accessed by the visitor, thereby effectively reducing randomness and uncontrollability of traffic scheduling. Further, because manual intervention is not required in a scheduling process, efficiency of scheduling the traffic of the node is significantly improved. In addition, a routing broadcast is not required to be frequently adjusted, thereby effectively guaranteeing a stability of a network service connection, and ensuring an experience of using a network service.

In addition, scheduling the traffic of the target node to the scheduled-in node includes: obtaining a server address used when the visitor accesses the target node and a server address used when the visitor accesses the scheduled-in node according to a pre-stored corresponding relationship of a node, a visitor of the node and a server address used when the visitor accesses the node; and generating and sending a scheduling instruction to a domain name system to enable the domain name system switches the server address used when the visitor accesses the target node to the server address used when the visitor accesses the scheduled-in node. The above description provides a manner of scheduling traffic, that is, the scheduling instruction is generated and sent to the domain name system according to the determined scheduled-in node so that the domain name system can switch the server addresses accessed by the visitor, thereby scheduling the traffic generated when the visitor accesses the node. Meanwhile, since the routing broadcast of the node is not changed, the server address accessed by the visitor is not switched when a connection is already established between the visitor and the node. Therefore, a current access of the visitor will not be interrupted, effectively reducing a possibility of a packet loss and improving a user experience.

In addition, obtaining a corresponding node accessed by each visitor when using a server address with a different path attribute includes: querying out a node accessed by each visitor when using a server address with a different path attribute and considering the node as the corresponding node according to the pre-stored corresponding relationship of the node, the visitor of the node and the server address used when the visitor accesses the node. The above description provides a manner in which a corresponding node accessed by a visitor when using a server address with a different path attribute is obtained according to a corresponding relationship. Since one visitor only accesses one node when using one server address with a determined path attribute, the corresponding node of the visitor may be obtained very clearly according to the corresponding relationship.

In addition, the pre-stored corresponding relationship of the node, the visitor of the node and the server address used when the visitor accesses the node is recorded in an access log of the node. That is, by collecting desired data through the access log of the node, the server address used when the visitor accesses the node may be obtained from the access log of the node, thereby obtaining the pre-stored corresponding relationship of the node, the visitor of the node and the server address used when the visitor accesses the node.

In addition, obtaining the scheduled-in node from the corresponding node of each visitor includes: obtaining another node other than the target node in the corresponding node of each visitor; obtaining a service bandwidth of the target node and a service bandwidth of the another node; calculating a bandwidth redundancy of the another node according to the service bandwidth of the another node; and determining whether the bandwidth redundancy of the another node is greater than the service bandwidth of the target node; if yes, the another node is taken as the scheduled-in node. The above description provides a manner of selecting a node into which the traffic can be scheduled from the obtained corresponding nodes. That is, whether the node can load the traffic scheduled from the target node is determined according to the bandwidth redundancy of the node, thereby realizing balanced loading of the traffic as possible. Further, it may be understood that a specific traffic value and a specific bandwidth value both can be calculated. Therefore, accurate scheduling of the traffic can be performed, avoiding a case that the node loads excessively too large traffic or too small traffic due to random traffic scheduling and the like.

In addition, obtaining the target node includes: obtaining an egress bandwidth of each node, and taking a node with the egress bandwidth of which a value exceeding a preset threshold value as the target node. The above description provides a manner of obtaining a target node, that is, whether the traffic of the node is required to be scheduled out is determined according to the egress bandwidth of the node. Since the egress bandwidth is not equivalent to a bandwidth of the node at a service layer but reflects the traffic loaded by the node more completely and comprehensively, the target node with the traffic to be scheduled out can be obtained more accurately in the above manner.

### BRIEF DESCRIPTION OF THE DRAWINGS

One or more embodiments are illustratively described with reference to corresponding drawings, and these illustrative descriptions do not constitute a limitation to the embodiments. Elements with the same reference numerals in the drawings represent similar elements, and the drawings do not constitute a proportion limitation unless otherwise stated.
FIG. 1 is a flowchart illustrating a method for scheduling traffic of a node according to a first embodiment of the present disclosure.
FIG. 2 is a schematic diagram illustrating access of a visitor according to the first embodiment of the present disclosure.
FIG. 3 is a flowchart illustrating a method for scheduling traffic of a node according to a second embodiment of the present disclosure.
FIG. 4 is a flowchart illustrating a specific implementation of step 203 according to a second embodiment of the present disclosure.
FIG. 5 is a flowchart illustrating an apparatus for scheduling traffic of a node according to a third embodiment of the present disclosure.
FIG. 6 is a block diagram illustrating a structure of an electronic device according to a fourth embodiment of the present disclosure.

### DETAILED DESCRIPTION OF THE EMBODIMENTS

To understand objectives, technical solutions and advantages of the present disclosure more clearly, different embodiments of the present disclosure will be described in detail below with reference to the drawings. However, persons of ordinary skill in the art may understand that many technical details may be put forward for readers to understand the present disclosure better in different embodiments of the present disclosure. However, the technical solutions of the present disclosure may also be achieved based on different changes and modifications of the following different embodiments without these technical details. The following different embodiments are divided for convenience of description, which do not constitute any limitation to the specific implementations of the present disclosure, and different embodiments may be combined with or referred to each other without contradiction.

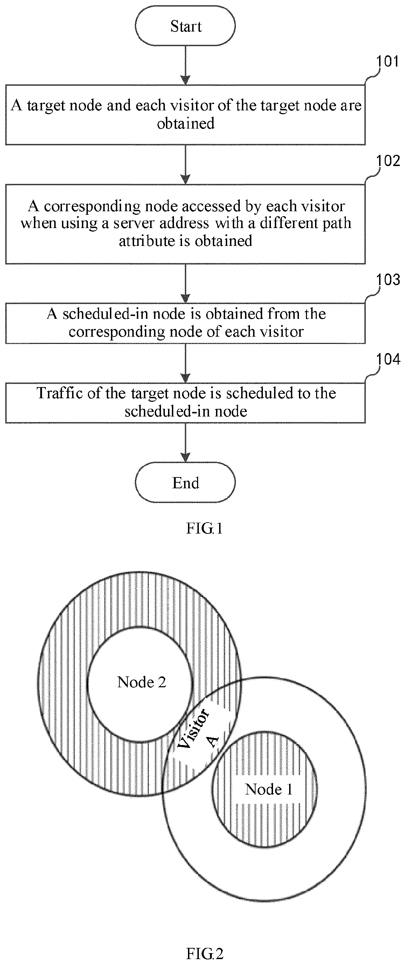

A first embodiment of the present disclosure provides a method for scheduling traffic of a node with a specific process shown in FIG. 1. The method includes the following steps. At step 101, a target node and each visitor of the target node are obtained.

At step 102, a corresponding node accessed by each visitor when using a server address with a different path attribute is obtained.

At step 103, a scheduled-in node is obtained from the corresponding nodes of each visitor.

At step 104, the traffic of the target node is scheduled to the scheduled-in node.

Implementation details of the method for scheduling traffic of a node in this embodiment are specifically described below. The following contents are implementation details provided only for convenience for understanding the embodiment and are not necessary for the implementation of the solution. The method for scheduling traffic of a node in this embodiment may be applied to an anycast cluster having a plurality of nodes. Server addresses pre-broadcast to external visitors by the nodes in the anycast cluster are same, but the path attributes (i.e., BGP attributes) of the server addresses broadcast by each node are different. The server addresses with different path attributes cover different network ranges, that is, the nodes accessed by the visitor when using the server addresses with the different path attributes are different. In this embodiment, each node pre-broadcasts a server address with at least two different path attributes for the visitor to selectively access, and the visitor accesses the node by using the server address with the different path attributes by polling.

At step 101, a server obtains the target node and each visitor of the target node, where the traffic of the target node waits for being scheduled out. Specifically, obtaining the target node by the server may be understood as follows: the server may calculate a value of the traffic loaded in real time by each node in the current anycast cluster, and when the value of the traffic loaded in real time by any node is calculated to exceed a preset threshold value, it may be considered that the traffic of the node is required to be scheduled out, and the node is considered as the target node.

Specifically, the server obtains the target node according to a pre-stored corresponding relationship of a node, a visitor of the node and a server address used when the visitor accesses the node, and the pre-stored corresponding relationship is obtained and collected dynamically through an access log of the node. It may be understood that the visitor accesses the node by using the server address with the different path attributes by polling, and a record that the node is accessed by the visitor will be definitely recorded in the access log of the node. Therefore, the corresponding relationship of the node, the visitor of the node and the server address used when the visitor accesses the node may be obtained and collected dynamically through the access log of the node. Since the same server address may have different path attributes, the path attribute is used to represent the server address used by the visitor in this embodiment. For example, the target node is a node 1, a visitor 1 accesses the node 1 by using a server address with a path attribute being AIP1, and a visitor 2 accesses the node 1 by using a server address with a path attribute being AIP2. In this case, the corresponding relationships of "visitor 1-AIP1-node 1" and "visitor 2-AIP2-node 1" are recorded in the access log of the node 1. Therefore, the visitor 1 and the visitor 2 of the target node 1 may be obtained.

At step 102, the server obtains the corresponding node accessed by each visitor when using a server address with a different path attribute, where each corresponding node pre-broadcasts a server address with at least two different path attributes for the visitor to access, and one visitor only accesses one node when using one server address with a determined path attribute.

For a node side, the corresponding relationship of the node, the visitor of the node and the server address used when the visitor accesses the node is dynamically collected in the access log of the node. Therefore, according to the server address with the different path attributes used by the visitor, the node accessed by the visitor when using the server address with the different path attributes may be queried out, and considered as the corresponding node.

For example, for the above node 1, the corresponding relationship of "visitor 1-AIP1-node 1" is recorded in the access log of the node 1, and a corresponding relationship of "visitor 1-AIP2-node 2" is recorded in an access log of the node 2. Therefore, according to the "visitor 1", it is known that the visitor 1 accesses the node 1 when using the server address with the path attribute being AIP1 and the visitor 1 accesses the node 2 when using the server address with the path attribute being AIP2.Therefore, the node 1 and the node 2 are taken as the corresponding nodes of the visitor 1.

At step 103, the server obtains the scheduled-in node from the corresponding nodes of each visitor, and the scheduled-in node is a node that may receive the traffic scheduled from the target node. It may be understood that the traffic of the target node is required to be scheduled to the node other than the target node itself to reduce the traffic loaded by the target node. However, the obtained corresponding node of each visitor of the target node includes the target node itself. As a result, nodes other than the target node in the corresponding nodes of each visitor are taken as the scheduled-in nodes. In addition, it may be understood that to realize accurate scheduling of the traffic and balancing of the traffic between nodes, the nodes other than the target node in the corresponding nodes of each visitor may also be selected according to a preset condition so that a selected node is taken as the scheduled-in node. In this way, the traffic is scheduled targetedly.

At step 104, the server schedules the traffic of the target node to the scheduled-in node. A domain name system (i.e., a DNS system, which may be understood as a global domain name system (GDNS)) is a system used to translate a domain name into an IP address to provide an Internet access service. The embodiment provides a manner of scheduling traffic through a domain name system, which is described below.

The server obtains a server address used when the visitor accesses the target node and a sever address used when the visitor accesses the scheduled-in node from the corresponding relationship of the node, the visitor of the node and the server address used when the visitor accesses the node, the corresponding relationship is dynamically collected from the access log, and the server generates a scheduling instruction and sends the scheduling instruction to the domain name system, where the scheduling instruction includes the above server address used when the visitor accesses the target node and the above server address used when the visitor accesses the scheduled-in node. In this way, the domain name system switches the server address used when the visitor accesses the target node to the server address used when the visitor accesses the scheduled-in node. Thus, during a node access, the visitor will not use the server address used when the visitor accesses the target node, so that the traffic generated by the visitor during the node access will also not be directed to the target node. For example, if the target node is the node 1, the server address that has the path attribute of AIP1 and that is used when the visitor 1 accesses the node 1 is obtained, the server address that has the path attribute of AIP2 and that is used when the visitor 1 accesses the node 2 is obtained if the scheduled-in node is the node 2, the server generates the scheduling instruction and sends the scheduling instruction to the domain name system, and the domain name system switches, in advance, the server address that has the path attribute of AIP1 and that is used when the visitor 1 accesses the node to the server address with the path attribute being AIP2. Therefore, the visitor 1 will access the node 2 by using the server address with the path attribute being AIP2 rather than access the node 1 by using the server address with the path attribute being AIP1 during an access, thereby scheduling the traffic of the node 1 to the node 2. Meanwhile, since the routing broadcast of the node is not changed, the connection already established between the visitor and the node is not switched. Thus, a current access of the visitor will not be interrupted, effectively reducing a possibility of a packet loss and improving the user experience.

The method for scheduling traffic of a node in this embodiment will be specifically described below with an example.

In this embodiment, the visitor accesses the nodes by using the server addresses with the different path attributes by polling. A schematic diagram of the access of the visitor is as shown in FIG. 2.

In FIG. 2, a portion not filled with lines refers to a network range covered by the server address that has the path attribute of AIP1 and that is broadcast by the node, and a portion filled with lines refers to a network range covered by the server address that has the path attribute of AIP2 and that is broadcast by the node. That is, when a visitor A uses the server address with the path attribute being AIP1, an access traffic of the visitor A will be directed to the node 1, namely, the visitor A will access the node 1 when using the server address with the path attribute being AIP1, and when the visitor A uses the server address with the path attribute being AIP2, an access traffic of the visitor A will be directed to the node 2, namely, the visitor A will access the node 2 when using the server address with the path attribute being AIP2.
(1) The server obtains the target node as the node 1. Since the corresponding relationship of "visitor 1-AIP1-node 1" is recorded in the access log of the node 1, the server obtains the visitor of the node 1 as the visitor 1.
(2) According to the corresponding relationship collected in the access log of the node, the corresponding relationship of "visitor 1-AIP2-node 2" recorded in the access log of the node 2 is obtained. Further, since the obtained node 2 is different from the node 1, it indicates that the visitor 1 accesses the node 2 different from the node 1 when using the server address with the path attribute being AIP2. Therefore, the node 2 is taken as the scheduled-in node.
(3) The server generates and sends the scheduling instruction to the domain name system, and the domain name system switches the server address with the path attribute being "AIP1" used by the "visitor 1" to the server address with the path attribute being "AIP2". Therefore, the visitor 1 will access the node 2 by using the server address with the path attribute being AIP2 during a node access, that is, the traffic of the node 1 is scheduled to the node 2.

Compared with existing technologies, each node pre-broadcasts a server address with at least two different path attributes for the visitor to selectively access in this embodiment of the present disclosure. Since the server address with different path attributes covers different network ranges, the visitor may access different nodes when using the server address with different path attributes. Therefore, by obtaining different nodes accessed by the visitor, the traffic of the target node can be accurately scheduled to another node accessed by the visitor, thereby effectively reducing randomness and uncontrollability of traffic scheduling. Further, human intervention is not required in the scheduling process, and thus an efficiency of scheduling the traffic of the node is significantly improved. In addition, the routing broadcast is also not required to be frequently adjusted, thereby effectively guaranteeing a stability of the network service connection, and ensuring an experience of using the network service.

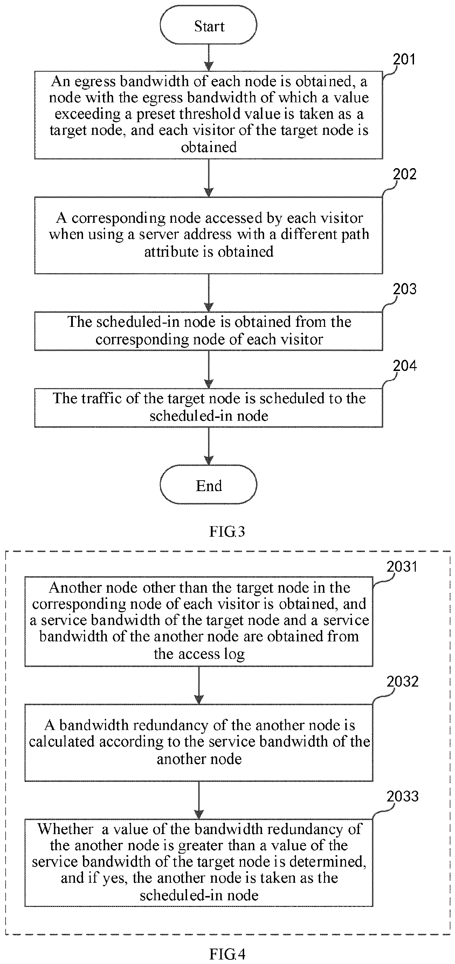

A second embodiment of the present disclosure provides a method for scheduling traffic of a node. A manner of obtaining a target node and a manner of selecting a scheduled-in node from the obtained corresponding nodes are provided in this embodiment. The method for scheduling traffic of a node in this embodiment is as shown in FIG. 3. The process of FIG. 3 will be specifically described below.

At step 201, an egress bandwidth of each node is obtained, a node with the egress bandwidth of which a value exceeding a preset threshold value is taken as a target node, and each visitor of the target node is obtained.

Specifically, the server obtains the egress bandwidth of each node, and determines whether the traffic of the node is required to be scheduled out based on a value of the egress bandwidth. That is, when it is obtained that there is a node with the value of the egress bandwidth greater than the preset threshold value or a preset upper limit, it is determined that the traffic of the node is required to be scheduled out, and the node is taken as the target node. The egress bandwidth herein may be understood as a maximum information loading capability loaded by a switch when the node is connected to an external network through the switch. The maximum information loading capacity is not equivalent to a traffic loaded when the node provides a service to the visitor at a service layer at present, and, that is, not equivalent to a service bandwidth of the node. Therefore, the egress bandwidth can reflect the traffic loaded by the node more completely and comprehensively than the bandwidth of the service layer. Thus, the target node with the traffic to be scheduled out can be obtained more accurately based on the value of the egress bandwidth.

Detailed descriptions of obtaining each visitor of the target node at this step are substantially same as the detailed descriptions at step 101, which are not described herein.

At step 202, a corresponding node accessed by each visitor when using a server address with a different path attribute is obtained. This step is substantially same as step 102, which is not described herein.

At step 203, the scheduled-in node is obtained from the corresponding node of each visitor.

Specifically, data obtained and collected dynamically by an access log of each node at this step further includes the service bandwidth of the node. Step 203 may be implemented through sub-steps 2031-2033 as shown in FIG. 4 as follows.

At sub-step 2031, another node other than the target node in the corresponding nodes of each visitor is obtained, and a service bandwidth of the target node and a service bandwidth of the another node are obtained from the access log.

At sub-step 2032, a bandwidth redundancy of the another node is calculated according to the service bandwidth of the another node.

At sub-step 2033, whether a value of the bandwidth redundancy of the another node is greater than a value of the service bandwidth of the target node is determined, if yes, the another node is taken as the scheduled-in node.

Specifically, the data obtained and collected dynamically by the access log of the node further includes the service bandwidth of the node, and the service bandwidth represents a traffic loaded by the node when providing a service for the visitor. Firstly, as shown in the descriptions of step 103, the server obtains another node other than the target node in the corresponding nodes of each visitor, and obtains the service bandwidth of the target node from the access log of the target node and the service bandwidth of the another node from the access log of the another node. In this embodiment, an upper threshold value of the bandwidth of each node is preset, the upper threshold value of the bandwidth representing a maximum traffic that can be loaded by each node. After the service bandwidth of the another node is obtained, the value of the bandwidth redundancy of the another node is calculated according to the formula: (the value of the bandwidth redundancy of another node) = (the upper threshold value of the bandwidth of another node - the value of the service bandwidth of another node), where the value of the bandwidth redundancy of the another node is used to represent the traffic, besides the service bandwidth, loadable by the another node. The value of the calculated bandwidth redundancy of the another node is compared with the value of the service bandwidth of the target node. If the value of the bandwidth redundancy of the another node is greater than the value of the service bandwidth of the target node, it indicates that the another node can load the traffic scheduled from the target node, and thus the another node may be taken as the scheduled-in node. However, if the value of the bandwidth redundancy of the another node is smaller than the value of the service bandwidth of the target node, it indicates that the traffic loaded by the another node itself will exceed the maximum traffic loadable by the another node after the another node receives the traffic scheduled from the target node, thus, it is inappropriate to take the another node as the scheduled-in node. By selecting the scheduled-in node in the above manner, the balanced loading of the traffic can be achieved as possible, avoiding the case that the node loads excessively large or small traffic due to random traffic scheduling and the like. Further, the specific traffic value and the specific bandwidth value can be calculated, and therefore accurate traffic scheduling can be realized.

At step 204, the traffic of the target node is scheduled to the scheduled-in node. This tep is substantially same as step 104, which is not described herein.

Compared with existing technologies, a manner of obtaining a target node is provided in this embodiment. That is, whether the traffic of the node is required to be scheduled out is determined based on the egress bandwidth of the node. Since the egress bandwidth is not equivalent to the bandwidth of the node at the service layer, but reflects the traffic loaded by the node more completely and comprehensively. As a result, the target node with the traffic to be scheduled out can be obtained more accurately in the above manner. In addition, a manner of selecting a node into which the traffic may be scheduled from the obtained corresponding nodes is further provided. That is, whether the node may load the traffic scheduled from the target node is determined according to the bandwidth redundancy receivable by the node, thereby achieving the balanced loading of the traffic as possible. Further, it may be understood that the specific traffic value and the specific bandwidth value can be both calculated, and therefore the accurate scheduling of the traffic can be realized, avoiding a case that the node loads excessively large or small traffic due to random traffic scheduling and so on.

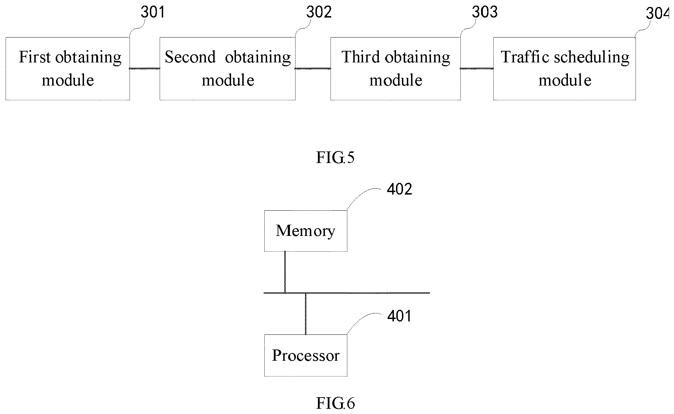

A third embodiment of the present disclosure provides an apparatus for scheduling traffic of a node. As shown in FIG. 5, the apparatus includes: a first obtaining module 301, a second obtaining module 302, a third obtaining module 303 and a traffic scheduling module 304.

The first obtaining module 301 is configured to obtain a target node and each visitor of the target node, where the traffic of the target node is to be scheduled out.

The second obtaining module 302 is configured to obtain a corresponding node accessed by each visitor when using a server address with a different path attribute, where each corresponding node pre-broadcasts a server address with at least two different path attributes for the visitor to access.

The third obtaining module 303 is configured to obtain a scheduled-in node from the corresponding nodes of each visitor.

The traffic scheduling module 304 is configured to schedule the traffic of the target node to the scheduled-in node.

In one example, scheduling, by the traffic scheduling module 304, the traffic of the target node to the scheduled-in node includes: obtaining a server address used when the visitor accesses the target node and a server address used when the visitor accesses the scheduled-in node according to a pre-stored corresponding relationship of a node, a visitor of the node and a server address used when the visitor accesses the node, and generating and sending a scheduling instruction to a domain name system to enable the domain name system to switch the server address used when the visitor accesses the target node to the server address used when the visitor accesses the scheduled-in node.

In one example, obtaining, by the second obtaining module 302, the corresponding node accessed by each visitor when using a server address with a different path attribute includes: querying out the node accessed by each visitor when using a server address with a different path attribute and considering the node as the corresponding node according to the pre-stored corresponding relationship of the node, the visitor of the node and the server address used when the visitor accesses the node.

In one example, the pre-stored corresponding relationship of the node, the visitor of the node and the server address used when the visitor accesses the node is recorded in an access log of the node.

In one example, obtaining, by the third obtaining module 303, the scheduled-in node from the corresponding nodes of each visitor includes: taking another node other than the target node in the corresponding node of each visitor as the scheduled-in node.

In one example, obtaining, by the third obtaining module 303, the scheduled-in node from the corresponding node of each visitor includes: obtaining another node other than the target node in the corresponding node of each visitor, obtaining a service bandwidth of the target node and a service bandwidth of the another node, calculating a value of a bandwidth redundancy of the another node according to a value of the service bandwidth of the another node, determining whether the value of the bandwidth redundancy of the another node is greater than a value of the service bandwidth of the target node, and if yes, taking the another node as the scheduled-in node.

In one example, obtaining, by the first obtaining module 301, the target node includes: obtaining an egress bandwidth of each node, and taking the node with the egress bandwidth of which a value exceeding a preset threshold value as the target node.

It is easily found that this embodiment is an apparatus embodiment corresponding to the first embodiment or the second embodiment. This embodiment may be implemented in cooperation with the first example or the second example, and relevant technical details mentioned in the first embodiment or the second embodiment are still valid in this embodiment, and will not be described again herein to reduce repetition. Correspondingly, the relevant technical details mentioned in this embodiment may also be applied to the first embodiment or the second embodiment.

It is to be noted that each module in this embodiment is a logical module. In a practical application, one logical unit may be one physical unit, or may be part of one physical unit, or may be implemented by a combination of a plurality of physical units. In addition, to highlight an innovative part of the present disclosure, units that are not closely related to solving the technical problems of the present disclosure are not introduced in this embodiment, which does not indicate that no other units exist in this embodiment.

A fourth embodiment of the present disclosure provides an electronic device. As shown in FIG. 6, the electronic device includes: at least one processor 401; and a memory 402 connected and communicated with the at least one processor 401, where the memory 402 stores instructions executable by the at least one processor 401, and the instructions, when executed by the at least one processor 401, cause the at least one processor 401 to perform the above method for scheduling traffic of a node.

The memory 402 and the processor 401 are connected by a bus. The bus may include any number of interconnected buses and bridges. The bus connects different circuits of one or more processors and different circuits of the memory 402 together, and may also connect other different circuits such as a peripheral device, a voltage regulator and a power management circuit together, which are well known in the art. Therefore, the above will not be further described herein. A bus interface provides an interface between the bus and a transceiver. The transceiver may be one or more elements, such as a plurality of receivers and transmitters, which are provided as units communicating with other different apparatuses on a transmission medium. Data processed by the processor 401 is transmitted on a wireless medium by an antenna. Further, the antenna also receives data and transmits the data to the processor 401.

The processor 401 is in charge of bus management and general processing, and may also provide different functions including timing, peripheral interfaces, voltage adjustment, power source management and other control functions. The memory 402 may be used to store data used when the processor 401 performs an operation.

A fifth embodiment of the present disclosure provides a computer readable storage medium storing computer programs. The computer programs, when executed by the processor, cause the processor to perform the method for scheduling traffic of a node in the above embodiments.

Persons skilled in the art may understand that the implementation of all or part of steps in the methods of the above embodiments may be completed by instructing relevant hardware through programs. The programs are stored in one storage medium and include several instructions for enabling one device (such as a single chip computer and a chip) or processor to perform all or part of the steps of the method in different embodiments of the present disclosure. The above storage medium includes: a USB flash drive, a mobile hard disk, a Read-Only Memory (ROM), a Random Access Memory (RAM), a magnetic disk or an optical disk and the like which may store program codes.

Persons of ordinary skill in the art may understand that the above embodiments are specific examples for implementing the present disclosure. In a practical application, various changes may be made in form and detail to the embodiments without departing from the spirit and the scope of the present disclosure.

## Claims

1. A method for scheduling traffic of a node, comprising:
obtaining a target node and each visitor of the target node, wherein traffic of the target node is to be scheduled out;
obtaining a corresponding node accessed by each visitor when using a server address with a different path attribute, wherein each corresponding node pre-broadcasts a server address with at least two different path attributes for the visitor to access;
obtaining a scheduled-in node from the corresponding node of each visitor; and
scheduling the traffic of the target node to the scheduled-in node.

2. The method according to claim 1, wherein scheduling the traffic of the target node to the scheduled-in node comprises:
obtaining a server address used when the visitor accesses the target node and a server address used when the visitor accesses the scheduled-in node according to a pre-stored corresponding relationship of a node, a visitor of the node and a server address used when the visitor accesses the node; and
generating and sending a scheduling instruction to a domain name system to enable the domain name system to switch the server address used when the visitor accesses the target node to the server address used when the visitor accesses the scheduled-in node.

3. The method according to claim 1, wherein obtaining the corresponding node accessed by each visitor when using the server address with the different path attributes comprises:
querying out the node accessed by each visitor when using the server address with the different path attributes and considering the node as the corresponding node according to a pre-stored corresponding relationship of a node, a visitor of the node and a server address used when the visitor accesses the node.

4. The method according to any one of claims 1 to 3, wherein the pre-stored corresponding relationship of the node, the visitor of the node and the server address used when the visitor accesses the node is recorded in an access log of the node.

5. The method according to claim 1, wherein obtaining the scheduled-in node from the corresponding node of each visitor comprises:
taking another node other than the target node in the corresponding node of each visitor as the scheduled-in node.

6. The method according to claim 5, wherein obtaining the scheduled-in node from the corresponding node of each visitor comprises:
obtaining another node other than the target node in the corresponding node of each visitor;
obtaining a service bandwidth of the target node and a service bandwidth of the another node;
calculating a value of a bandwidth redundancy of the another node according to a value of the service bandwidth of the another node;
determining whether the value of the bandwidth redundancy of the another node is greater than the value of the service bandwidth of the target node; and,
if yes, taking the another node as the scheduled-in node.

7. The method according to claim 1, wherein obtaining the target node comprises:
obtaining an egress bandwidth of each node, and taking the node with the egress bandwidth of which a value exceeding a preset threshold value as the target node.

8. An apparatus for scheduling traffic of a node, comprising:
a first obtaining module, configured to obtain a target node and each visitor of the target node, wherein traffic of the target node is to be scheduled out;
a second obtaining module, configured to obtain a corresponding node accessed by each visitor when using a server address with a different path attribute, wherein each corresponding node pre-broadcasts a server address with at least two different path attributes for the visitor to access;
a third obtaining module, configured to obtain a scheduled-in node from the corresponding node of each visitor; and
a traffic scheduling module, configured to schedule the traffic of the target node to the scheduled-in node.

9. An electronic device, comprising:
at least one processor; and
a memory connected and communicated with the at least one processor,
wherein the memory stores instructions executable by the at least one processor, and the instructions, when executed by the at least one processor, cause the at least one processor to perform the method for scheduling traffic of a node according to any one of claims 1 to 7.

10. A computer storage medium storing computer programs, wherein the computer programs, when executed by a processor, cause the processor to perform the method for scheduling traffic of a node according to any one of claims 1 to 7.
